# EUROPEAN PATENT SPECIFICATION

(11) **EP 3 221 377 B1**
(45) Date of publication and mention of the grant of the patent: **06.02.2019**
(21) Application number: 15801619.6
(22) Date of filing: 16.11.2015
(51) Int. Cl.: C08G 59/32, C08G 59/40, C09J 163/00

(54) **EPOXY ADHESIVE, AUTOMOTIVE MEMBER, AND METHOD FOR MANUFACTURING SAME**
EPOXIDKLEBSTOFF, KRAFTFAHRZEUGELEMENT UND VERFAHREN ZUR HERSTELLUNG DAVON
ADHÉSIF ÉPOXY, ÉLÉMENT D'AUTOMOBILE ET LEUR PROCÉDÉ DE FABRICATION

(30) Priority: 21.11.2014 JP 2014237170
(43) Date of publication of application: 27.09.2017
(73) Proprietor: 3M Innovative Properties Company, St. Paul, MN 55133-3427 (US)
(72) Inventor: KASAHARA, Takahiro, St. Paul, Minnesota 55133-3427 (US); KOSEKI, Daiki, St. Paul, Minnesota 55133-3427 (US); KOBAYASHI, Hiroyuki, St. Paul, Minnesota 55133-3427 (US)
(74) Representative: Isarpatent
(86) International application number: PCT/US2015/060904
(87) International publication number: WO 2016/081376

(56) References cited:
- DATABASE WPI Week 201503 Thomson Scientific, London, GB; AN 2015-009822 XP002753252, & CN 104 087 223 A (YANTAI XINYOU TECHNOLOGY CO LTD) 8 October 2014 (2014-10-08)
- DATABASE WPI Week 201152 Thomson Scientific, London, GB; AN 2011-J01183 XP002753253, & CN 102 086 364 A (GUANGDONG FENGHUA ADVANCED TECHNOLOGY GR) 8 June 2011 (2011-06-08)

## Description

### Background

The present invention relates to an epoxy adhesive, automotive member, and method for manufacturing the same.

Epoxy adhesives generally have favorable adhesive properties, mechanical strength, chemical resistance, and heat resistance, and therefore, are used in a wide variety of fields such as automotive, electrical engineering, shipbuilding, aerospace, civil engineering, construction and the like. Adhesives for these applications may be required to provide adhesion with high reliability under high temperature conditions. For example, adhesives for automotive member applications may be required to provide high reliability under high temperature conditions of, for example, approximately 180 degrees Celsius.

Generally, the use of a curable material with a high glass transition temperature (Tg) can be suggested as one means for achieving an adhesive with high heat resistance. However, curable materials with a high Tg tend to be rigid and brittle, and therefore epoxy adhesives obtained using these curable materials have favorable overlap shear adhesive strength (OLSS), but the peeling strength tends to be lower.

In the past, measures such as reducing the cross-linked density, adding a rubber modified polymer, adding an epoxy resin modified with rubber or urethane, adding a core-shell resin, and the like have been examined in order to obtain an epoxy adhesive that has both excellent overlap sheer adhesive strength (OLSS) and excellent peel strength.

Patent document 1 discloses a single component type heat resistant epoxy adhesive composition containing (A) a phenol novolac epoxy resin, (B) a trifunctional epoxy resin, and (C) a latent curing agent, as essential components.

Patent document 2 discloses a single component type epoxy adhesive composition for an electric power steering device containing 100 parts by mass of an epoxy resin including at least an aromatic epoxy resin, 1 to 20 parts by mass of a dicyandiamide curing agent, 10 to 15 parts by mass of a toughness imparting agent containing a thermoplastic elastomer with a glass transition temperature (Tg) of less than -40°C, and a filler, wherein the Tg of the cured adhesive composition is 170°C or higher, and the storage elasticity is 2 GPa or less when measured using a dynamic viscoelastic tester at 25°C and 10 Hz.

Patent document 3 discloses a thermosetting adhesive containing an epoxy resin, core-shell rubber, thermal expanding fine particles, and a curing agent, wherein the average particle size of the thermal expanding fine particles is 9 to 19 µm, the expansion initiation temperature is 70 to 100°C, and the maximum expansion temperature is 110 to 135°C.

Patent document 4 discloses a single component thermosetting epoxy resin adhesive, containing (A) one or more types of epoxy resin selected from the group including epoxy resins having a naphthalene backbone and epoxy resins having a biphenyl backbone, (B) one or more types of imidazole selected from the group including imidazole and imidazole derivatives, (C) dicyandiamide, (D) an organic acid dihydrazide compound, (E) one or more types of compounds selected from a group including of resin acid treated calcium carbonate and metal hydroxides, and (F) core-shell acrylic particles.

Patent document 5 discloses a single component type epoxy resin adhesive containing (A) 100 parts by mass of an epoxy resin, (B) 5 to 30 parts by mass of a latent curing agent, (C) 3 to 15 parts by mass of cross-linked rubber particles with an average particle size of 0.05 to 0.5 µm, (D) 1 to 5 parts by mass of a curing accelerator, (E) 10 to 40 parts by mass of a filler with an average particle size of 0.5 to 5 µm, wherein the epoxy resin of (A) is a two component mixed epoxy resin containing (A-1) 75 to 50 mass% of a bisphenol A type epoxy resin and (A-2) 25 to 50 mass% of a bisphenol F type epoxy resin.

### Prior Art Documents

Patent Document 1: Japanese Unexamined Patent Application Publication No. H9-100456
Patent Document 2: Japanese Unexamined Patent Application Publication No. 2005-15563
Patent Document 3: International Publication No. 2014/071334
Patent Document 4: Japanese Unexamined Patent Application Publication No. 2010-150401
Patent Document 5: Japanese Unexamined Patent Application Publication No. 2011-148867

### Summary

### Problems to be Solved by the Invention

However, an epoxy adhesive with favorable overlap sheer adhesive strength and peel strength cannot provide sufficient heat resistance, even by using the technologies disclosed in these documents. Therefore, there is demand for an adhesive that has both overlapping sheer adhesive strength and peel strength, while also having excellent heat resistance.

Furthermore, a rigid molecular structure which is advantageous from the perspective of heat resistance often causes quite high viscosity, and therefore the workability of the adhesive (for example, trace discharge performance due to micro-needles and/or syringes) will often be degraded.

Furthermore, with several types of applications for adhesives (for example automotive member applications and the like), there is demand for providing both overlap sheer adhesive strength and peel strength, while having excellent properties such as heat resistance with regards to members to be attached made of various materials (metal materials, ceramic materials, polymer materials, and the like), and there is demand to achieve the aforementioned performance when adhering members to be attached that are made of different materials, for example.

In light of the foregoing, an object of the present invention is to provide an epoxy adhesive with a high glass transition temperature in order to achieve favorable heat resistance, low viscosity in order to provide favorable workability, as well as excellent overlap shear adhesive strength and peel strength, as well as to provide an automotive member with excellent heat resistance obtained using this adhesive, and a manufacturing method thereof.

### Means for Solving the Problems

The present disclosure includes the following configurations:
1. An epoxy adhesive including: (A) an epoxy, (B) a core-shell toughening agent, and (C) a latent curing agent that does not have an aniline backbone;
   wherein the epoxy (A) contains at least 50 mass% of a trifunctional or higher liquid epoxy.
2. An automotive member including a first adherend, a second adherend, and the epoxy adhesive of the present disclosure provided between the first adherend and the second adherend, and cured to bond the first adherend and the second adherend.
3. A method of manufacturing an automotive member including a first adherend, a second adherend, and an epoxy adhesive provided between the first adherend and the second adherend, and cured to bond the first adherend and the second adherend, the manufacturing method including:providing the epoxy adhesive according of the present disclosure between the first adherend and the second adherend; and forming a cured adhesive by curing the epoxy adhesive at a temperature of 100°C or higher to 250°C or lower.

### Effect of the Invention

Several embodiments of the present invention provide an epoxy adhesive with high Tg and low viscosity, that provides excellent overlap shear adhesive strength and excellent peeling strength. Several forms of the present invention provide an epoxy adhesive with not only the properties noted above but also properties that provide favorable adhesion to an adherend made of a wide range of materials (in other words, favorable adhesion between adherends made of different types of materials can be obtained). Several forms of the present invention provide an automotive member with excellent heat resistance and peel resistance, obtained using these epoxy adhesives, and provide a manufacturing method thereof.

### Brief Description of the Drawings

FIG. 1 is a diagram for describing the method for measuring the overlap shear adhesive strength.
FIG. 2 is a diagram for describing the method for measuring the T-die peel strength.
FIG. 3 is a diagram showing the DMA measurement results for Example 1;

### Detailed Description

Exemplary embodiments of the present invention are described below, but the present invention is not restricted to these embodiments, and any variation that does not violate the spirit and scope of the patent claims are intended to be included in the present invention. Note that unless otherwise noted, the various measurements referred to in this disclosure are intended to be able to be performed by the methods disclosed in the Examples section, or by a method considered to be equivalent to these methods by one skilled in the art.

### Epoxy Adhesive

An embodiment of the present disclosure provides an epoxy adhesive including: (A) an epoxy, (B) a core-shell toughening agent, and (C) a latent curing agent that does not have an aniline backbone; wherein the epoxy (A) contains at least 50 mass% of a trifunctional or higher liquid epoxy.

### (A) Epoxy

The epoxy adhesive of the present disclosure is a thermosetting adhesive, and the epoxy (A) includes an epoxy adhesive as a thermosetting component. The epoxy (A) contains at least 50 mass% of a trifunctional or higher liquid epoxy. With the present disclosure, the term liquid epoxy refers to an epoxy where the viscosity at a rotational speed of 200 rotations/second is 0.01 Pa· s or higher to 50 Pa· s or lower when measured at 70°C using a cone-and-plate type viscometer. The trifunctional or higher liquid epoxy can be a single type or compound, or can be a combination of two or more types of compounds. The trifunctional or higher liquid epoxy contributes to forming the epoxy adhesive of the present disclosure with a high Tg and low viscosity. Furthermore, in several embodiments, the trifunctional or higher liquid epoxy contributes to achieving favorable adhesive performance during adhesion between adherends that are made of various materials (for example, adhereing adherends that are made of materials containing iron, adhereing adherends made of materials containing aluminum, or adhering an adherend made of a material containing iron and an adherend made of a material containing aluminum, and the like) due to the contribution of the plurality of functional groups had thereby.

In a preferable embodiment, the equivalent weight of the trifunctional or higher liquid epoxy is approximately 60 or higher, or approximately 70 or higher, or approximately 80 or higher from the perspective of ease of procurement and reaction properties, and is approximately 1000 or lower, or approximately 500 or lower, or approximately 300 or lower from the perspective of the heat resistance of the cured epoxy adhesive and from the perspective of achieving a high Tg.

From the perspective of favorably providing low viscosity and high Tg to the epoxy adhesive of the present disclosure, preferable examples of the trifunctional or higher liquid epoxy include glycidyl amine type epoxy resins, glycidyl phenol type epoxy resins, and the like. Examples of glycidyl amine type epoxy resins include triglycidyl aminophenol epoxy compounds, triglycidyl aminocresol epoxy compounds, tetraglycidyl diaminodiphenyl methane epoxy compounds, tetraglycidyl meta-xylylenediamine epoxy compounds, tetraglycidyl bisamino methyl cyclohexane epoxy compounds, tetraglycidyl glycoluril epoxy compounds, and the like. Examples of glycidyl phenol type epoxy resins include phenol novolac epoxy compounds, triphenyl methane triglycidyl ether compounds, and the like.

Preferable examples of the triglycidyl aminophenol epoxy compounds include triglycidyl p-aminophenol expressed by the following general formula (1): 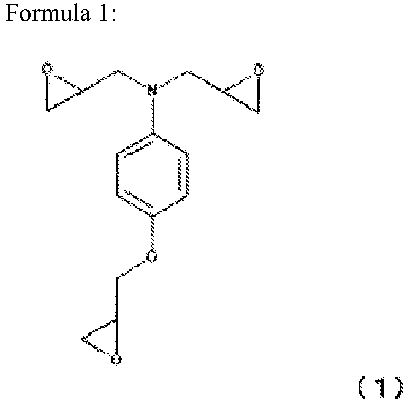 and triglycidyl m-aminophenol expressed by the following general formula (2):

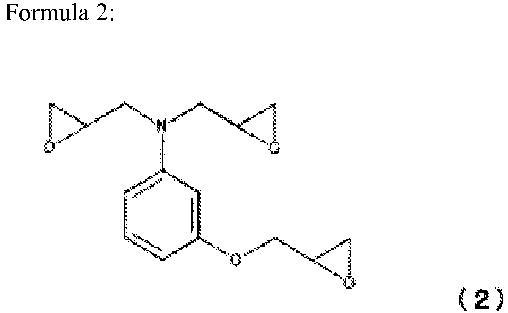

Preferable examples of the triglycidyl aminocresol epoxy compounds include triglycidyl aminocresol expressed by the following formula (3).

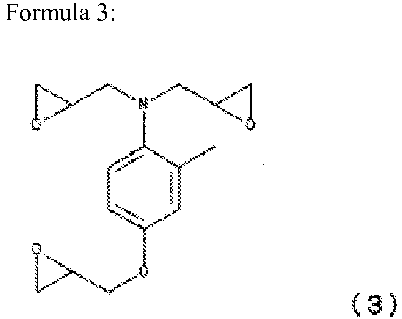

Preferable examples of the triphenyl methane triglycidyl ether compounds include triphenyl methane triglycidyl ether expressed by the following formula (4).

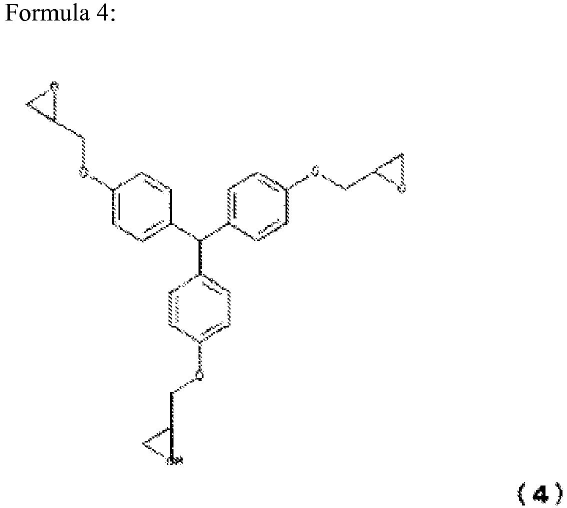

Preferable examples of the tetraglycidyl diaminodiphenyl methane epoxy compounds include the tetraglycidyl diaminodiphenyl methane (4,4'-methylene bis[N,N-bis(oxiranylmethyl) aniline]) expressed by the following formula (5).

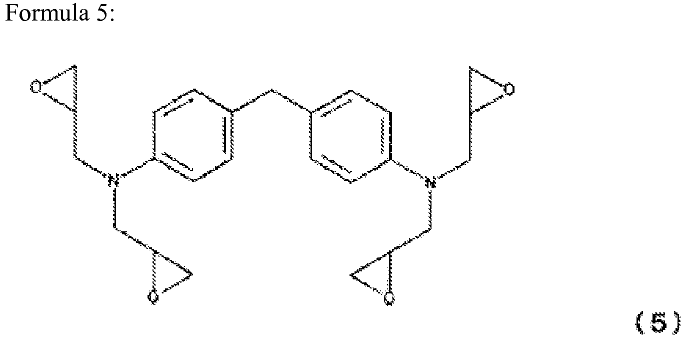

Preferable examples of the tetraglycidyl meta-xylylenediamine epoxy compounds include tetraglycidyl meta-xylylenediamine expressed by the following formula (6).

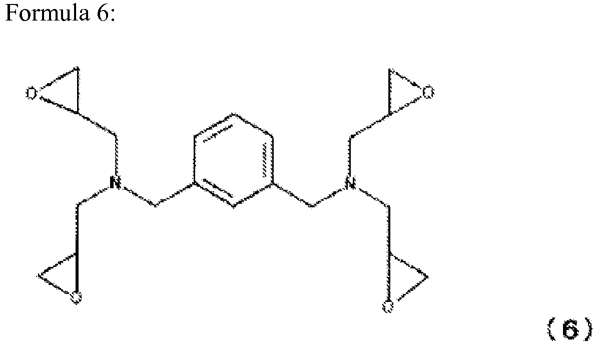

Preferable examples of the tetraglycidyl bisamino methyl cyclohexane epoxy compounds include tetraglycidyl bisamino methyl cyclohexane expressed by the following formula (7).

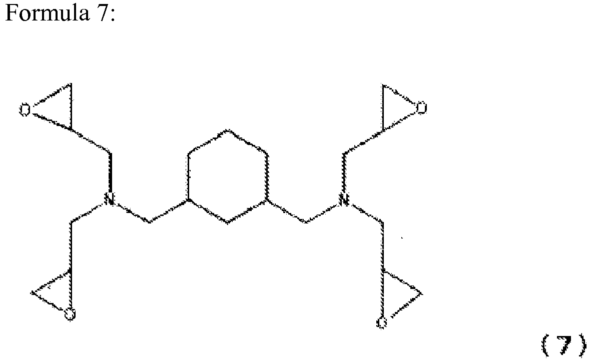

Preferable examples of the tetraglycidyl glycoluril epoxy compounds include tetraglycidyl glycoluril expressed by the following formula (8).

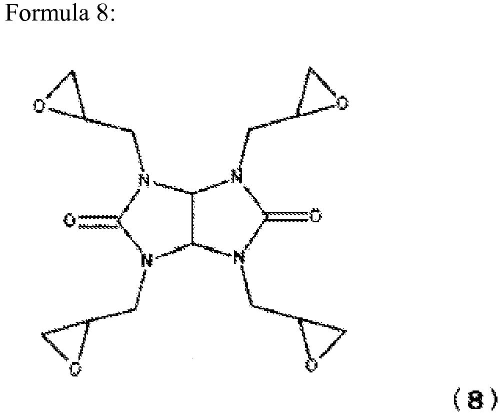

Furthermore, preferable examples of the phenol novolac epoxy compounds include the compounds expressed by the following formula (9): 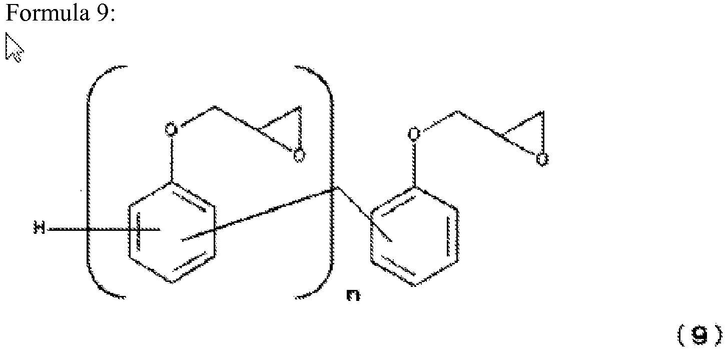 (where n is 2 or higher).

In a preferred embodiment, the trifunctional or higher liquid epoxy includes a trifunctional epoxy, a tetrafunctional epoxy, or a combination thereof. Furthermore, in a preferred embodiment, the trifunctional or higher liquid epoxy is a trifunctional epoxy, a tetrafunctional epoxy, or a combination thereof.

From the perspective of obtaining an epoxy adhesive with a high Tg and low viscosity, the content amount of the trifunctional or higher liquid epoxy is approximately 50 mass% or higher, preferably approximately 60 mass% or higher, or approximately 70 mass% or higher, based on 100 mass% of the epoxy (A). The aforementioned content amount can be approximately 100 mass%, but from the perspective of using as desired an additional epoxy component as described below, the content amount is preferably approximately 95 mass% or lower, approximately 90 mass% or lower, or approximately 85 mass% or lower.

The epoxy (A) can also include an additional epoxy component in addition to the trifunctional or higher liquid epoxy. Examples of the additional epoxy component can include any epoxy compound not included in the trifunctional or higher liquid epoxy, including glycidyl ethers where an aliphatic, alicyclic, or aromatic hydroxyl compound has been glycidylated, glycidyl esters where an aliphatic, alicyclic, or aromatic carboxylic acid has been glycidylated, and the like. Specific examples include bisphenol epoxy resins such as bisphenol A epoxy resins, dimer acid modified bisphenol A epoxy resins, bisphenol F epoxy resins, epoxy resins having an aliphatic backbone such as hexanediol diglycidyl ether, novolac epoxy resins such as phenol novolac epoxy resin and cresol novolac epoxy resins, brominated epoxy resins, alicyclic epoxy resins, epoxylated ethers such as polyethylene glycol glycidyl ethers and polypropylene glycol glycidyl ethers, glycidyl neodecanoate, triglycidyl isocyanurates having an isocyanurate ring, phenoxy resins, glycidyl ethers having one or more functional groups on a naphthalene backbone, and compounds that are glycidyl ethers with a biphenyl backbone or the like. However, trifunctional or higher liquid epoxy compounds are excluded.

In several embodiments, the additional epoxy component includes alkyl monoglycidyl ether, alkyl diglycidyl ether, alkylphenol monoglycidyl ether, and other low viscosity epoxy compounds as a reactive diluent or reactive plasticizer.

### (B) Core-Shell Toughening Agent

A core-shell toughening agent (B) of the present disclosure includes any type of core-shell toughening agent that is understood by one skilled in the art to be able to be used as a toughening agent by acting as a resin modifier. In a typical embodiment, the core-shell toughening agent (B) is a composite material configured by materials where the core portion on the inside and the shell portion on the outside are mutually different. Herein, the term "different materials" refers to materials where the composition and/or properties are mutually different, and therefore includes materials where the same type of resins are used but the molecular weights are mutually different, and the like.

From the perspective of favorably achieving a toughening effect on the epoxy adhesive, the Tg of the shell portion is preferably higher than the Tg of the core portion. In this case, while flexibility is provided to the cured epoxy adhesive because the core portion which has a relatively low Tg functions as a centralized point of stress, the shell portion suppresses unwanted agglomeration of the core-shell toughening agent, and thus the core-shell toughening agent can be uniformly dispersed in the epoxy adhesive.

In the exemplified embodiment, the materials of the core portion and the shell portion can be selected such that the Tg of the core portion is approximately -110°C or higher to approximately -30°C or lower, and the Tg of the shell portion is approximately 0°C or higher to approximately 200°C or lower. In the present disclosure, the Tg of the core portion material and shell portion material is defined as the peak temperature of tanδ during dynamic viscoelasticity measurements.

The core-shell toughening agent can be a conjugate diene such as butadiene, isoprene, 1,3-pentadiene, cyclopentadiene, dicyclopentadiene, or the like, or a nonconjugate diene polymer such as 1,4-hexadiene, ethylidene norbornene, or the like; copolymers of these conjugate or nonconjugate dienes with an aromatic vinyl compound such as styrene, vinyl toluene, α-methyl styrene, and the like, or with an unsaturated nitrile compound such as acrylonitrile, methacrylonitrile, or the like, or with a (meth)acrylate such as 2-hydroxyethyl acrylate, 2-hydroxyethyl methacrylate, 3-hydroxybutyl acrylate, glycidyl methacrylate, butoxyethyl methacrylate, and the like; acrylic rubber such as polybutyl acrylate and the like; silicone rubber; or a core-shell graft copolymer having a core part that includes a rubber component such as an IPN composite rubber containing silicone and a polyalkyl acrylate, and a shell component formed by copolymerizing a (meth)acrylate ester around the core part. Polybutadiene, a butadiene - styrene copolymer, or an acrylic butadiene rubber - styrene copolymer can be advantageously used as the core portion, and a material formed by graft-copolymerizing methyl (meth)acrylate can be advantageously used as the shell portion. The shell portion can be laminar, or the shell portion can be configured from one layer or a plurality of layers.

Examples of the core-shell toughening agent include methyl methacrylate - butadiene copolymer, methyl methacrylate - butadiene - styrene copolymer, methyl methacrylate - acrylonitrile - butadiene - styrene copolymer, methyl methacrylate - acrylic rubber copolymer, methyl methacrylate - acrylic rubber - styrene copolymer, methyl methacrylate - acrylic butadiene rubber copolymer, methyl methacrylate - acrylic butadiene rubber - styrene copolymer, methyl methacrylate - (acrylic silicone IPN rubber) copolymer, and the like, but are not restricted thereto. Methyl methacrylate - butadiene copolymer, methyl methacrylate - butadiene - styrene copolymer, and methyl methacrylate - acrylic butadiene rubber - styrene copolymer can be advantageously used as the core-shell toughening agent.

The core-shell toughening agent is normally in the form of fine particles, and the average value (weight average particle diameter) of the primary particle diameter thereof is generally approximately 0.05 µm or higher or approximately 0.1 µm or higher to approximately 5 µm or lower or approximately 1 µm or lower. In the present disclosure, the average value of the primary particle diameter of the core-shell toughening agent is determined from a value obtained by zeta potential particle size distribution measurement.

In a preferred embodiment, the core-shell toughening agent can be used in a state dispersed in a matrix. The core-shell toughening agent dispersed in a matrix can be favorably dispersed in the epoxy adhesive, and therefore is advantageous. A matrix with favorable affinity with the epoxy (A) is particularly preferable from the perspective of favorable dispersion of the core-shell toughening agent in the epoxy adhesive. Examples of the matrix can include epoxy resins (such as bisphenol A and the like).

The core-shell toughening agent can be a commercial product that is provided as a resin modifying agent or the like, and examples include BTA 751 (commercially available from Dow Chemical) as a methyl methacrylate-butadiene-styrene (MBS) type core-shell resin, MX-153 (a resin where methyl methacrylate-butadiene-styrene (MBS) that is commercially available from Kaneka is dispersed in bisphenol A diglycidyl ether) as the core-shell resin where a resin is dispersed in epoxy, and F351 (commercially available from Aika Industries) as the acrylic core-shell resin, and the like.

From the perspective of favorably establishing both the overlap shear adhesive strength and the peel strength, and particularly from the perspective of favorably achieving overlap shear adhesive strength and peel strength under low temperature conditions, as well as thermal shock resistance, the amount of the core-shell toughening agent (B) used is preferably approximately 1 part by mass or higher, approximately 5 parts by mass or higher, or approximately 10 parts by mass or higher in the cured epoxy adhesive based on 100 parts by mass of the epoxy (A). Furthermore, from the perspective of viscosity for achieving favorable coating performance, the amount is also preferably approximately 60 parts by mass or lower, approximately 50 parts by mass or lower, or approximately 40 parts by mass or lower.

### (C) Latent Curing Agent Not Containing an Aniline Backbone

Various compounds generally used as a latent curing agent of a liquid epoxy adhesive can be used as the latent curing agent that does not include an aniline backbone (C) (hereinafter, simply referred to as "latent curing agent (C)"). The latent curing agent does not have activity for curing an epoxy resin at room temperature, but can be activated by heat to cure the epoxy resin. For example, a conventionally known granular latent curing agent is insoluble in an epoxy resin at room temperature, but becomes soluble when heated, and thus can cure the epoxy resin. The latent curing agent (C) does not contain an aniline backbone. In the present disclosure, "does not contain an aniline backbone" means that an aniline structure (Ph-NH2) (where Ph is a phenyl group) or a structure where a hydrogen in the structure has been substituted is not included in the molecule. The latent curing agent not containing an aniline backbone (for example, diaminodiphenyl sulfone conventionally known as an epoxy curing agent) is not advantageous from the perspective of the adhesion performance and low temperature curing properties of the epoxy adhesive and the viscosity of the formulation. The latent curing agent (C) is a one or more types of compounds selected from compounds that do not contain an aniline backbone. The epoxy adhesive of the present disclosure does not exclude the use of a curing agent other than the latent curing agent (C) (in other words, a latent curing agent containing an aniline backbone) within a range that does not impair the object of the present invention, but in a typical embodiment, the curing agent included in the epoxy adhesive contains the latent curing agent (C).

The latent curing agent used as the latent curing agent (C) can be a single type or can be used as a combination of two or more types based on the type of the epoxy (A), the desired properties of the cured product of the epoxy adhesive, and the like. The latent curing agent (C) in the present disclosure includes a compound that contributes to curing of the epoxy resin. In several embodiments, the latent curing agent (C) is used in combination with a curing accelerating agent and/or a crosslinking agent.

Examples of the compounds that can be used as the latent curing agent (C) include dicyandiamide (DICY) and derivatives thereof, hydrazide compounds (for example organic acid hydrazides), boron trifluoride-amine complexes (for example, boron trifluoride monoethyl amine), imidazole compounds (for example, those that form fine particles at ambient temperature such as 2-phenyl-4,5-dihydroxymethyl imidazole, 2,4-diamino-6-[2'-methyl imidazolyl-(1')]-ethyl-s-triazine isocyanuric acid adducts), amineimide, polyamine, tertiary amines, amine compounds (such as alkyl urea and the like); reaction products between amine compounds and epoxy compounds (amine - epoxy adducts), reaction products between amine compounds and isocyanate compounds, and the like. These can be used individually, or in a combination of two or more types.

In several embodiments, if a latent curing agent with a relatively high reaction start temperature is used (such as a polyamine compound or dicyandiamide, or the like), the latent curing agent is preferably used in combination with a curing accelerator from the perspective of favorable progression of the curing reaction. The curing accelerator can be an imidazole compound, boron trifluoride, tertiary amine, urea compound (such as 1,1'-(4-methyl-m-phenylene) bis(3,3-dimethyl) urea, 3-(p-chlorophenyl)-1,1-dimethyl urea, and the like. As known to one skilled in the art, there are some compounds that can be used as the curing accelerator that also function as a latent curing agent, such as the aforementioned imidazole compounds, boron trifluoride, amine-epoxy compounds, tertiary amine compounds, and the like. Examples of latent curing agent and curing accelerator combinations include combinations of dicyandiamide and imidazole compounds and/or urea compounds and/or tertiary amines, and combinations of polyamine compounds and urea compounds, and the like. In several embodiments, the latent curing agent (C) can include dicyandiamide from the perspective of providing favorable heat resistance, overlap sheer adhesive strength, and peeling strength to the epoxy adhesive of the present disclosure. A combination of dicyandiamide as the latent curing agent and an imidazole and/or urea compound as the curing accelerator can be used as an example.

Generally, a curing material with a high Tg will tend to require a higher curing temperature in order to achieve full curing. However, even lower temperature thermosetting conditions are preferable from the perspective of preventing stress from concentrating during curing due to the effect of the coefficient of thermal expansion. A combination of dicyandiamide as a latent curing agent and imidazole and/or a urea compound and/or a tertiary amine as the curing accelerator can be suggested as an example of a preferable composition of the latent curing agent (C) from the perspective of reducing the thermosetting temperature.

The amount of the latent curing agent (C) that is used can be selected by considering the curing properties of the epoxy adhesive, the heat resistance of the cured epoxy adhesive, the moisture resistance, and the like. Preferably, from the perspective of causing curing to proceed favorably and from the perspective of increasing the Tg of the epoxy adhesive, the amount is approximately 1 part by mass or higher, or approximately 2 parts by mass or higher, or approximately 3 parts by mass or higher based on 100 parts by mass of the epoxy (A), and from the perspective of suppressing an increase in viscosity of the mixture, and from the perspective of preventing a loss of heat resistance of the cured product, the amount is preferably 50 parts by mass or lower, or approximately 40 parts by mass or lower, or approximately 30 parts by mass or lower.

If a curing accelerator and/or cross-linking agent is used, the usage amount of these compounds can be selected by considering the type and amount of the latent curing agent that is used, and the like. From the perspective of causing curing to proceed favorably, the amount of curing accelerator and cross-linking agent is, for example, approximately 1 part by mass or higher, or approximately 2 parts by mass or higher, or approximately 3 parts by mass or higher based on 100 parts by mass of epoxy, and is, for example, approximately 20 parts by mass or lower, or approximately 15 parts by mass or lower, or approximately 10 parts by mass or lower from the perspective of suppressing an increase in the viscosity of the mixture and enhancing the storage stability.

### (D) Optional Components

The epoxy adhesive can also include optional components in addition to the aforementioned components (A) through (C). Examples of the optional components include: fillers (for example, aluminum, alumina, silica, glass beads, boron nitride, barium sulfate, and other inorganic fillers); fumed silica and other rheology adjusting agents; phenol type and sulfur type antioxidants; silane coupling agents such as epoxy modified alkoxysilane and the like; flame retardants; colorants; leveling agent; antifoaming agents; solvent; dispersants, and the like.

The filler favorably contributes to the adhesive properties of the cured epoxy adhesive. The shape of the filler is preferably spherical from the perspective of achieving an epoxy adhesive with low viscosity. The particle size of the filler is preferably approximately 0.1 µm or larger, or approximately 1 µm or larger from the perspective of not causing an excessive increase in the viscosity of the epoxy adhesive, and is preferably approximately 500 µm or smaller, or approximately 300 µm or smaller, or approximately 100 µm or smaller from the perspective of not causing a significant loss in the overlap sheer adhesive strength and peeling strength. Note that in the present disclosure, the "filler particle size" refers to the median diameter (d50) based on the particle distribution obtained by a light scattering method. The particle distribution determined by the light scattering method is the particle size distribution determined by measuring the amount of scattered light and the number of occurrences therefor under conditions where the relationship to the amount of scattered light is already known based on the scattering phenomenon that occurs when light impinges on minute particles floating in a fluid, or is the particle distribution obtained by measuring the diffraction pattern based on the change in the diffraction pattern from minute particles of laser light, the change thereof being due to the size of the particles. The median diameter (d50) refers to the particle size when 50% of all of the particles in the particle size distribution are particles that are larger than a certain particle size.

The usage amount of optional components can be appropriately determined within a range that does not hinder the effects of the present invention.

The amount of filler that is used is preferably approximately 10 parts by mass or more, or approximately 20 parts by mass or more, or approximately 30 parts by mass or more based on 100 parts by mass of the epoxy (A) from the perspective of achieving favorable effects of the filler, and is preferably approximately 250 parts by mass or less, or approximately 220 parts by mass or less, or approximately 200 parts by mass or less from the perspective of achieving favorable adhesive properties.

Furthermore, the amount of rheology adjusting agent is approximately 0.1 mass% or more, or approximately 0.2 mass% or more, or approximately 0.5 mass% or more, and approximately 5 mass% or less, approximately 3 mass% or less, or approximately 2 mass% or less based on the total mass of the epoxy adhesive being 100 mass%.

The epoxy adhesive can be prepared, for example, by heating the aforementioned components as necessary while blending in a mixer, and performing defoaming as necessary.

In a preferable embodiment, the viscosity when the epoxy adhesive is measured at 25°C at a rotational speed of 200 rotations/second using a cone-and-plate type viscometer is approximately 10 Pa▪ s or higher, and approximately 200 Pa▪ s or lower. The viscosity is preferably approximately 15 Pa▪ s or higher, or approximately 20 Pa▪ s or higher, or approximately 25 Pa▪ s or higher and approximately 180 Pa▪ s or lower, or approximately 170 Pa▪ s or lower, or approximately 160 Pa▪ s or lower from the perspective of workability of the epoxy adhesive.

In a preferred embodiment, the glass transition temperature (Tg) is approximately 180°C or higher when the epoxy adhesive is cured and the measurement sample that is obtained is measured using a dynamic viscoelastic measuring device. The glass transition temperature (Tg) is preferably approximately 180°C or higher, or approximately 190°C or higher, or approximately 200°C or higher from the perspective of having favorable heat resistance, and is preferably approximately 350°C or lower, or approximately 330°C or lower, or approximately 300°C or lower from the perspective of suppressing an increase in the viscosity of the epoxy adhesive, and from the perspective of causing the advancement of cross-linking of the epoxy resin as much as possible below the curing temperature to an extent that will not affect the surrounding members and the adherends.

In a preferred embodiment, from the perspective of achieving favorable shear peeling resistance, the overlap sheer adhesive strength when the epoxy adhesive is measured in accordance with JIS K6850 is preferably approximately 10 MPa or higher, or approximately 12 MPa or higher, or approximately 15 MPa or higher with regards to an aluminum plate.

In a preferred embodiment, the ratio between the overlap shear adhesive strength after exposure at 250°C for 12 hours and the overlap shear adhesive strength before exposure when the epoxy adhesive is measured in accordance with JIS K6850 is preferably approximately 0.7 or higher, or approximately 0.75 or higher, or approximately 0.8 or higher from the perspective of achieving favorable heat aging resistance. The aforementioned ratio is preferably large, and is preferably approximately 1.

In a preferred embodiment, the T-die peel strength with regards to an aluminum plate when the epoxy adhesive is measured in accordance with JIS K6351-3 is approximately 2 kN/m or higher, or approximately 2.5 kN/m or higher, or approximately 3.0 kN/m or higher.

### Epoxy Adhesive Applications

Another embodiment of the present disclosure provides:
an automotive member including a first adherend, a second adherend, and an epoxy adhesive provided between the first adherend and the second adherend, and cured to bond the first adherend and the second adherend.

Furthermore, another embodiment of the present disclosure provides:
a method of manufacturing an automotive member including a first adherend, a second adherend, and an epoxy adhesive provided between the first adherend and the second adherend, and cured to bond the first adherend and the second adherend, the method thereof including:
providing the epoxy adhesive of the present disclosure between the first adherend and the second adherend; and
forming a cured adhesive by curing the epoxy adhesive at a temperature of 100°C or higher to 250°C or lower.

The epoxy adhesive of the present disclosure can bond together adherends made of various materials such as wood, metal, coated metal, plastic and filled plastic substrates, glass fibers, and the like. The epoxy adhesive can be applied while heating if necessary to one or both of the first adherend and the second adherend using a caulking gun or the like. Next, the two adherends are arranged such that the epoxy adhesive contacts both adherends. Next, the epoxy adhesive is cured by heating to bond the two adherends. The curing conditions of the epoxy adhesive will vary depending on the formulation of the adhesive, but in one embodiment, curing is performed at a curing temperature of, for example, approximately 100°C or higher, or approximately 110°C or higher, or approximately 120°C or higher, and approximately 250°C or lower, or approximately 230°C or lower, or approximately 200°C or lower, and with a curing time of approximately 5 minutes to approximately 90 minutes, or approximately 10 minutes to approximately 60 minutes. More typical examples of the curing conditions include 140°C x 30 minutes, or 180°C x 10 minutes.

In a preferable embodiment, the thickness of the cured epoxy adhesive in an automotive member is, for example, approximately 1 µm or more, or approximately 10 µm or more, or approximately 20 µm or more, and, for example, approximately 500 µm or less, or approximately 400 µm or less, or approximately 300 µm or less.

In an exemplary embodiment, the adherend includes a material containing aluminum. Furthermore, in an exemplary embodiment, the adherend includes a material containing iron. Examples of an adherend that includes a material containing iron include a steel plate (for example, steel plate, coated steel plate, zinc plated steel plate (zinc electroplated steel plate, molten zinc plated steel plate, galvanized steel plate, and the like)). Furthermore, in another embodiment, the adherend includes a plastic material such as carbon FRP (carbon fiber reinforced plastic), PPS (polyphenylene sulfide), PBT (polybutylene terephthalate), and the like. In yet another embodiment, the adherend includes a ceramic material. In an exemplary embodiment, the material of one of the first adherend and the second adherend is a material containing aluminum, and the material of the other adherend is a material containing iron (for example steel). The epoxy adhesive of the present disclosure can have favorable overlap sheer peel strength and favorable peeling strength even if the first adherend and the second adherend are made of different types of materials.

The epoxy adhesive of the present disclosure is favorably applied for adhering automotive members, for example, and particularly for adhering metal members. Examples of embodiments where the epoxy adhesive of the present disclosure is particularly advantageously used include adhering reactor core materials that are placed in a booster converter in an automotive inverter unit, securing motor coils, securing magnets, securing members near the engine room, and the like.

### Examples

The embodiment of the present invention is further described by examples, but the present invention is not restricted to these examples.

### 1. Materials

The materials indicated in Table 1 were used.

### 2. Evaluation Method

### (1) Overlap sheer adhesive strength (OLSS)

The overlap sheer adhesive strength was measured by the following procedures in accordance with JIS K6850.

Adherend: Aluminum plat6e (Al2024 where the surface was FPL etched)
Adherend Dimensions: width 25 mm x length 100 mm x thickness 1.6 mm
Adhesion Area: length 25 mm x width 12.5 mm
Adhesive Thickness: 0.1 mm

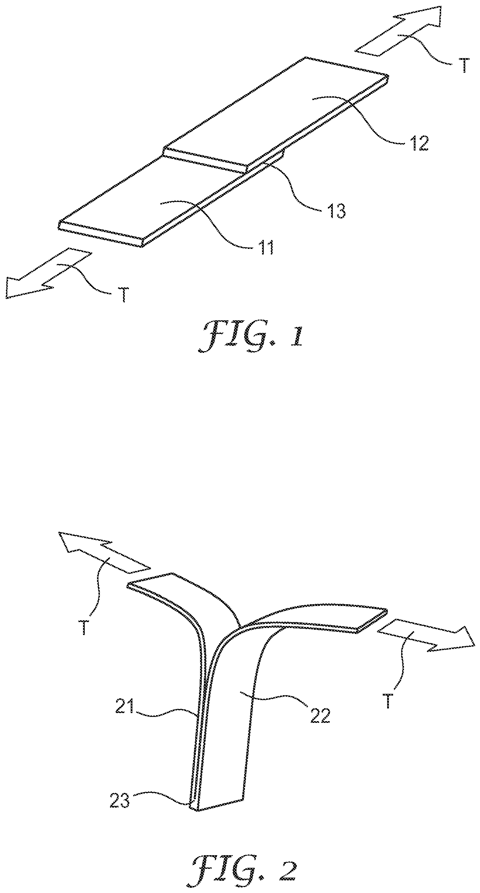

A rectangular area of 25 mm x 12.5 mm was demarcated with masking tape on an adherend 11 while referring to FIG. 1. An epoxy adhesive 13 according to the examples or comparative examples was applied in the area. The adherend 11 and an adherend 12 were bonded with a wire having a diameter of 0.1 mm interposed therebetween so that the thickness of the epoxy adhesive was 0.1 mm to thereby achieve a laminated body with the adherend 11, the adherend 12, and the epoxy adhesive 13 in between the adherends. The laminated body was clamped with office clips and heated. The laminated body was cured at a temperature of 180°C for 10 minutes to obtain a test piece with an adhesion area of 25 mm x 12.5 mm and an adhesive thickness of 0.1 mm.

A tensile test in the tensile direction T as shown in FIG. 1 was performed on each test sample using a Tensilon universal testing machine (A&D Co., Ltd., RTC1325A) under the conditions of a temperature of 25°C and tensile speed of 5 mm/minute.

### (2) Heat aging resistance

A test piece was made using the same procedure as described in (1). The test piece was exposed to an environment of 250°C for 12 hours, and then naturally cooled to 25°C to obtain a heated test piece. The overlap sheer adhesive strength was measured after heating each of the heated test pieces under the same conditions as (1). The ratio between this value and the value of the overlap sheer adhesive strength measured in (1) (in other words, the overlap sheer adhesive strength before exposure) was calculated.

### (3) T-die peel strength

The T-die peel strength was measured by the following procedure in accordance with JIS K6351-3.

Adherend: Aluminum plate (the surface of Al1050 was FPL etch processed)
Adherend Dimensions: length 150 mm x width 25 mm x thickness 0.8 mm
Adhesion Area: length 100 mm x width 25 mm
Adhesive Thickness: 0.1 mm

A rectangular area of 100 mm x 25 mm was demarcated with masking tape on an adherend 21 while referring to FIG. 2. An epoxy adhesive 23 according to the examples or comparative examples was applied in the area. The adherend 21 and the adherend 22 were bonded with a wire having a diameter of 0.1 mm interposed therebetween so that the thickness of the epoxy adhesive was 0.1 mm to thereby achieve a laminated body with the adherend 21, the adherend 22, and the epoxy adhesive 23 in between the adherends. The laminated body was clamped with office clips and heated. The laminated body was cured at a temperature of 180°C for 10 minutes to obtain a test piece with an adhesion area of 25 mm x 100 mm and adhesive thickness of 0.1 mm.

A tensile test in the tensile direction T as shown in FIG. 2 was performed on each test sample using a Tensilon universal testing machine (A&D Co., Ltd., RTC1325A) under the conditions of a temperature of 25°C and tensile speed of 50 mm/minute.

### (4) Viscosity

The initial viscosity of the epoxy adhesive was measured by a cone-and-plate viscometer (VISCOMETER manufactured by HAKKE Co.) under the conditions of 25°C and sheer rate (in other words, rotational speed) of 200 rotations/second.

### (5) Glass transition temperature (Tg)

The glass transition temperature (Tg) of a cured product obtained by curing the epoxy adhesive under conditions of 180°C for 10 minutes was measured by a dynamic viscoelastic measuring device (DMA). The measurement conditions were as follows.
Measurement mode: Tension mode
Distortion frequency: 10 Hz
Rate of temperature increase: 4°C / minute
The glass transition temperature was obtained as the peak temperature of tanδ that is defined by storage elastic modulus (E') / loss elastic modulus (E").

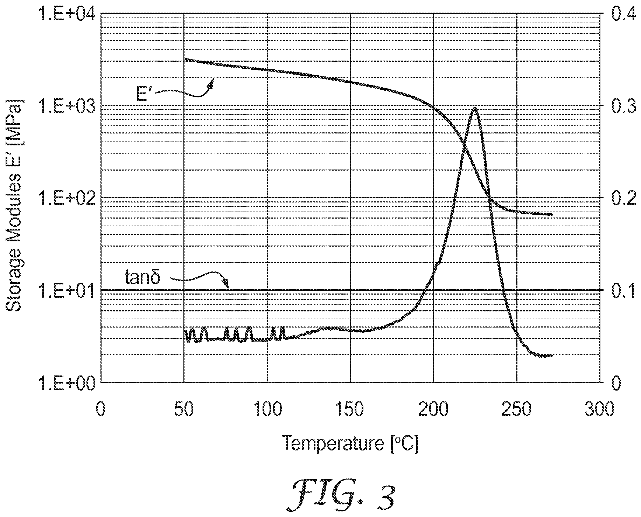

FIG. 3 shows the DMA measurement results of Example 1.

### 3. Test

### [Embodiments 1 through 6 and Comparative Examples 1 through 3]

The formulation components indicated in Table 1 were mixed in a mixer to obtain the epoxy adhesives. Performance evaluations of the obtained epoxy adhesives were performed by the aforementioned procedures.

The results are indicated in Tables 2 and 3.

**Table 1:**

| Product Name | Explanation | Supply Source |
|---|---|---|
| jER604 | 4,4'-methylene bis(N,N-diglycidylaniline) (Cone and plate viscosity¹⁾: 2.28Pa/s) | Mitsubishi Chemical Corporation |
| MY0510 | N,N-diglycidyl-4-glycidyloxy aniline (Cone and plate viscosity¹⁾: 0.04Pa/s) | Huntsman Corporation |
| YD-128R | Bisphenol A diglycidylether | Nippon Steel & Sumikin Chemical Co., Ltd. |
| YDF170 | Bisphenol F diglycidylether | Nippon Steel & Sumikin Chemical Co., Ltd. |
| EP4005 | Alphatic diol diglycidyl ether | Adeka Corporation |
| ED-503 | 1,6-hexanediol diglycidyl ether | Adeka Corporation |
| MX-153 | Nano-sized core-shell resin (MBS type) Distributed bisphenol A diglycidylether | Kaneka Corporation |
| BTA731 | Core-shell resin (MBS type) | Dow Chemical |
| BTA751 | Core-shell resin (MBS type) | Dow Chemical |
| F351 | Core-shell resin (acrylic core and shell) | AICA Kogyo Co., Ltd. |
| AX3-75 | Aluminum oxide (particle size: 4µm) | Nippon Steel Sumikin Materials Co., Ltd. Micro Company |
| AX10-75 | Aluminum oxide (particle size: 8µm) | Nippon Steel Sumikin Materials Co., Ltd. Micro Company |
| LS44 | Silicon dioxide | Marukama Kamado Toryo K.K. |
| CG-1200G | Dicyandiamide | Air Products and Chemicals |
| Aradur 9664-1 | Diaminodiphenyl sulfone | Huntsman Corporation |
| 2MAOK-PW | 2,4-diamino-6-[2'-methylimidazolyl-(1')]-ethyl-s-triazine isocyanuric acid adduct | Shikoku Chemicals Corporation |
| PN50 | Epoxy resin amine adduct | Ajinomoto Fine-Techno Co., Inc. |
| Omicure52 | Urea catalyst | CVC Thermoset Specialties |
| BF3. MEA | Boron trifluoride monoethylamine | Stella Chemifa Corporation |
| Monuron | 3-(p-chlorophenyl)-1,1-dimethyl urea | 3M MRD |
| M460 | Carbon black | Cabot Corporation |
| OFS6040 | Epoxy silane | Dow Corning Toray Co., Ltd. |
| TS720 | PDMS surface treated fumed silica | Cabot Corporation |

| | | |
|---|---|---|
| 1) Measured by a cone-and-plate viscometer (VISCOMETER manufactured by HAKKE Co.) under the conditions of 70°C and a shear rate (in other words, rotational speed) of 200 rotations/second. | | |

| Formulation (Parts by Mass) | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| Component | Product Name | Explanation | | | | | | | | | |
| Liquid tetrafunctional epoxy | jER604 | 4,4'-methylene bis (N,N-diglycidyl aniline) | 30.0 | 30.0 | 30.0 | 30.0 | 30.0 | 30.0 | 30.0 | | |
| Liquid trifunctional epoxy | MY0510 | N,N-diglycidyl-4-glycidyloxy aniline | 42.0 | 42.0 | 42.0 | 42.0 | 42.0 | 42.0 | 42.0 | 45.0 | |
| Bifunctional epoxy | YD-128R | Bisphenol A diglycidyl ether | | | | | | | | 27.0 | |
| Bifunctional epoxy | YDF 170 | Bisphenol F diglycidyl ether | | | | | | | | | 80.0 |
| Bifunctional epoxy | EP4005 | Alphatic diol diglycidyl ether | | | | | | | | | 8.0 |
| Bifunctional epoxy | ED-503 | 1,6-hexanediol diglycidyl ether | | | | | | | | | 12.0 |
| Core-Shell Toughening Agent | MX-153 | Nano-sized core-shell resin (MBS type) Distributed bisphenol A diglycidyl ether | 42.0 | 42.0 | 42.0 | 42.0 | 42.0 | 42.0 | 42.0 | 42.0 | |
| Core-Shell Toughening Agent | BTA731 | Core-shell resin (MBS type) | | | 15.0 | | | | | | 15.0 |
| Core-Shell Toughening Agent | BTA751 | Core-shell resin (MBS type) | | | | 15.0 | | | | | |
| Core-Shell Toughening Agent | F351 | Core-shell resin (acrylic core and shell) | 15.0 | 15.0 | | | 15.0 | 15.0 | 15.0 | 15.0 | |
| Filler | AX3-75 | Aluminum oxide | 50.0 | 50.0 | 50.0 | 50.0 | 50.0 | 50.0 | 50.0 | 50.0 | |
| Filler | AX10-75 | Aluminum oxide | 100.0 | 100.0 | 100.0 | 100.0 | 100.0 | 100.0 | 100.0 | 100.0 | |
| Filler | LS44 | Silicon dioxide | | | | | | | | | 70.0 |
| Latent Curing agent | CG-1200G | Dicyandiamide | 11.3 | 11.3 | 11.3 | 11.3 | | | | | 9.0 |
| Latent Curing agent | Aradur 9664-1 | Diaminodiphenyl sulfone | | | | | | | 44.0 | 40.0 | |
| Latent Curing agent | 2MAOK-pw | 2,4-diamino-6-[2'-methylimidazolyl-(1')]-ethyl-s-triazine isocyanuric acid adduct | | | | | 5.0 | 10.0 | | | |
| Curing accelerator | PN50 | Epoxy resin amine adduct | 4.8 | | 4.8 | 4.8 | | | | | |
| Curing accelerator | Omicure5 2 | Urea catalyst | | 4.8 | | | | | | | |
| Curing accelerator | BF3.MEA | Boron trifluoride monoethylamine | | | | | | | 2.0 | 2.0 | |
| Curing accelerator | Monuron | 3-(p-chlorophenyl)-1,1-dimethyl urea | | | | | | | | | 4.7 |
| Pigment | M460 | Carbon black | 1.1 | 1.1 | 1.1 | 1.1 | 1.1 | 1.1 | 1.1 | 1.1 | |
| Silane coupling agent | OFS6040 | Epoxy silane | 0.6 | 0.6 | 0.6 | 0.6 | 0.6 | 0.6 | 0.6 | 0.6 | 0.5 |
| Rheology adjusting agent | TS720 | PDMS surface treated fumed silica | 2.5 | 2.5 | 2.5 | 2.5 | 2.5 | 2.5 | 2.5 | 2.5 | 4.0 |
| Total | | | 299.3 | 299.3 | 299.3 | 299.3 | 288.2 | 293.2 | 329.2 | 325.2 | 203.2 |

**Table 3:**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Cone and plate viscosity at 25°C [Pa/s] | | | | | | | | | |
| 50 seconds⁻¹ | 121.63 | 121.07 | 163.56 | 168.23 | 93.17 | 98.534 | 515 | 280.63 | 38.553 |
| 100 seconds⁻¹ | 86.379 | 88.542 | 127.6 | 135.13 | 67.88 | 69.88 | 390 | 201.28 | 35.798 |
| 200 seconds⁻¹ | 68.113 | 70.327 | 92.352 | 112.26 | 56.2 | 53.55 | No data | 126.2 | 34.36 |
| Initial | | | | | | | | | |
| OLSS at 25°C (MPa) | 23.0 | 25.9 | 21.3 | 22.8 | 17.8 | 20.9 | 13.7 | 13.0 | 39.1 |
| T-die peeling at 25°C (kN/m) | 6.0 | 6.4 | 3.8 | 3.7 | 3.6 | 4.3 | 0.3 | 0.4 | 9.4 |
| OLSS after heating (MPa) | 21.9 | 21.9 | 22.1 | 24.6 | 15.5 | 19.5 | 6.1 | 7.3 | 3.5 |
| OLSS retention rate after heating (%) | 95.3 | 84.5 | 103.9 | 107.6 | 86.8 | 93.8 | 44.9 | 56.2 | 9.1 |
| Tg by DMA [°C] | 219.00 | 213.48 | 223.25 | 222.19 | 185.95 | 216.99 | 269.77 | 283.21 | 99.21 |

Examples 1 through 6 had a high glass transition temperature that exceeded 200°C, and provided both low viscosity and high adhesive properties (overlap shear adhesive strength, T-die peel strength, and retention of overlap shear adhesive strength after heating) under standard curing conditions of 180°C for 10 minutes.

With comparative examples 1 and 2, a latent curing agent with an aniline backbone was used as the latent curing agent, and therefore the overlap shear adhesive strength, T-die peel strength, and retention of the overlap shear adhesive strength after heating were inferior. Furthermore, in comparative example 3, a trifunctional or higher liquid epoxy was not used, so the Tg was low, and the retention of the overlap shear adhesive strength after heating was inferior.

Furthermore, as shown in FIG. 3, the epoxy adhesive of example 1 had properties such that the maximum value of tan δ was low while having high storage elasticity in the high temperature region. This shows that the epoxy adhesive of the present disclosure is useful as a sealing resin for example, in addition to an adhesive for bonding structural members.

The epoxy adhesive of the present disclosure can be favorably applied to various types of applications including automotive members such as core materials that are placed in automotive inverter units.

## Claims

1. An epoxy adhesive comprising: (A) an epoxy, (B) a core-shell toughening agent, and (C) a latent curing agent that does not have an aniline backbone; wherein the epoxy (A) contains at least 50 mass% of a trifunctional or higher liquid epoxy.

2. The epoxy adhesive according to claim 1, wherein the viscosity when measured at 25°C and at a rotational speed of 200 rotations/sec using a cone-and-plate viscometer is 10 Pa·s or higher to 200 Pa·s or lower.

3. The epoxy adhesive according to claim 1 or 2, wherein the glass transition temperature (Tg) is 180°C or higher when a measurement sample obtained by curing the epoxy adhesive is measured using a dynamic viscoelastic measuring device.

4. The epoxy adhesive according to any one of claims 1 through 3, wherein the overlap shear adhesive strength is 10 MPa or higher when measured in accordance with JIS K6850.

5. The epoxy adhesive according to any one of claims 1 through 4, wherein a ratio between the overlap shear adhesive strength after exposure to 250°C for 12 hours and the overlap shear adhesive strength before exposure is 0.7 or higher when measured in accordance with JIS K6850.

6. The epoxy adhesive according to any one of claims 1 through 5, wherein the T-die peel strength is 2 kN/m or higher when measured in accordance with JIS K6351-3.

7. An automotive member comprising a first adherend, a second adherend, and the epoxy adhesive according to any one of claims 1 through 6 provided between the first adherend and the second adherend and cured to bond the first adherend and the second adherend.

8. A method of manufacturing an automotive member including a first adherend, a second adherend, and the epoxy adhesive provided between the first adherend and the second adherend and cured to bond the first adherend and the second adherend, the method thereof comprising: providing the epoxy adhesive according to any one of claims 1 through 6 between the first adherend and the second adherend; and forming a cured adhesive by curing the epoxy adhesive at a temperature of 100°C or higher to 250°C or lower.

## Patentansprüche

1. Epoxidkleber, umfassend: (A) ein Epoxid, (b) einen Kern-Hülle-Elastifikator, und (C) ein latentes Härtungsmittel, das kein Anilingrundgerüst aufweist; wobei das Epoxid (A) mindestens 50 Masse-% an trifunktionellem oder höherem flüssigem Epoxid enthält.

2. Epoxidkleber nach Anspruch 1, wobei die Viskosität, gemessen bei 25 °C und einer Drehzahl von 200 Umdrehungen/s unter Verwendung eines Kegel- und Plattenviskosimeters 10 Pa·s oder höher bis 200 Pa·s oder weniger beträgt.

3. Epoxidkleber nach Anspruch 1 oder 2, wobei die Glasübergangstemperatur (Tg) 180 °C oder höher ist, wenn eine durch Härten des Epoxidklebers erhaltene Messprobe unter Verwendung einer dynamischen viskoelastischen Messvorrichtung gemessen wird.

4. Epoxidkleber nach einem der Ansprüche 1 bis 3, wobei die Überlappungsscherungshaftfestigkeit 10 MPa oder mehr beträgt, wenn gemäß JIS K6850 gemessen.

5. Epoxidkleber nach einem der Ansprüche 1 bis 4, wobei ein Verhältnis zwischen der Überlappungsscherungshaftfestigkeit nach Exposition gegenüber 250 °C für 12 Stunden und der Überlappungsscherungshaftfestigkeit vor der Exposition 0,7 oder höher ist, wenn gemäß JIS K6850 gemessen.

6. Epoxidkleber nach einem der Ansprüche 1 bis 5, wobei die Winkel-Schälfestigkeit 2 kN/m oder mehr ist, gemessen gemäß JIS K6351-3.

7. Kraftfahrzeugelement, das ein erstes Fügeteil, ein zweites Fügeteil und einen Epoxidkleber nach einem der Ansprüche 1 bis 6 umfasst, der zwischen dem ersten Fügeteil und dem zweiten Fügeteil bereitgestellt und ausgehärtet wird, um das erste Fügeteil und das zweite Fügeteil zu verbinden.

8. Verfahren zum Herstellen eines Kraftfahrzeugelements, das ein erstes Fügeteil, ein zweites Fügeteil und einen Epoxidkleber einschließt, der zwischen dem ersten Fügeteil und dem zweiten Fügeteil bereitgestellt wird und gehärtet wird, um das erste Fügeteil und das zweite Fügeteil zu verbinden, wobei das Verfahren davon umfasst: Bereitstellen des Epoxidklebers nach einem der Ansprüche 1 bis 6 zwischen dem ersten Fügeteil und dem zweiten Fügeteil; und Bilden eines gehärteten Klebers durch Härten des Epoxidklebers bei einer Temperatur von 100 °C oder höher bis 250 °C oder weniger.

## Revendications

1. Adhésif époxy comprenant : (A) un époxy, (B) un agent de ténacité à noyau-enveloppe, et (C) un agent de durcissement latent qui n'a pas de squelette aniline ; dans lequel l'époxy (A) contient au moins 50 % en masse d'un époxy liquide trifonctionnel ou de fonctionnalité plus élevée.

2. Adhésif époxy selon la revendication 1, dans lequel la viscosité, lorsqu'on mesure à 25 °C et à une vitesse de rotation de 200 rotations/s en utilisant un viscosimètre à cône et plaque va de 10 Pa·s ou plus élevée à 200 Pa·s ou plus basse.

3. Adhésif époxy selon la revendication 1 ou 2, dans lequel la température de transition vitreuse (Tg) est de 180 °C ou plus élevée lorsqu'un échantillon de mesure obtenu par durcissement de l'adhésif époxy est mesuré en utilisant un dispositif de mesure viscoélastique dynamique.

4. Adhésif époxy selon l'une quelconque des revendications 1 à 3, dans lequel la résistance adhésive par cisaillement en chevauchement est de 10 MPa ou plus élevée, lorsqu'on mesure conformément à JIS K6850.

5. Adhésif époxy selon l'une quelconque des revendications 1 à 4, dans lequel un rapport entre la résistance adhésive par cisaillement en chevauchement après exposition à 250 °C pendant 12 heures et la résistance adhésive par cisaillement en chevauchement avant exposition est de 0,7 ou plus élevé lorsqu'on mesure conformément à JIS K6850.

6. Adhésif époxy selon l'une quelconque des revendications 1 à 5, dans lequel la résistance au pelage sur matrice en T est de 2 kN/m ou plus élevée lorsqu'on mesure conformément à JIS K6351-3.

7. Élément automobile comprenant une première partie adhérée, une deuxième partie adhérée et l'adhésif époxy selon l'une quelconque des revendications 1 à 6 fourni entre la première partie adhérée et la deuxième partie adhérée et durci pour lier la première partie adhérée et la deuxième partie adhérée.

8. Procédé de fabrication d'un élément automobile incluant une première partie adhérée, une deuxième partie adhérée, et l'adhésif époxy fourni entre la première partie adhérée et la deuxième partie adhérée et durci pour lier la première partie adhérée et la deuxième partie adhérée, le procédé de celui-ci comprenant : la fourniture de l'adhésif époxy selon l'une quelconque des revendications 1 à 6 entre la première partie adhérée et la deuxième partie adhérée ; et la formation d'un adhésif durci en durcissant l'adhésif époxy à une température de 100 °C ou plus élevée jusqu'à 250 °C ou plus basse.
